Europäisches Patentamt

(19) European Patent Office (11) Numéro de publication : **0 097 593**

Office européen des brevets **B1**

(12) **FASCICULE DE BREVET EUROPÉEN**

(45) Date de publication du fascicule du brevet : 03.12.86

(51) Int. Cl.⁴ : **G 07 F 13/10**, B 65 B 43/44, B 65 G 59/10

(21) Numéro de dépôt : 83401273.4

(22) Date de dépôt : 20.06.83

(54) **Dispositif de distribution de gobelets pour distributeur automatique de boissons.**

(30) Priorité : 21.06.82 FR 8210789

(43) Date de publication de la demande : 04.01.84 Bulletin 84/01

(45) Mention de la délivrance du brevet : 03.12.86 Bulletin 86/49

(84) Etats contractants désignés : AT BE CH DE GB IT LI LU NL SE

(56) Documents cités :
DE-B- 1 236 996
FR-A- 1 230 705
FR-A- 1 484 300
FR-A- 1 545 775
FR-A- 2 398 668
US-A- 3 119 519

(73) Titulaire : **Munier, Muriel Renée**
**Chemin de la Butte Normont**
**F-91410 Dourdan (FR)**

(72) Inventeur : **Munier, Muriel Renée**
**Chemin de la Butte Normont**
**F-91410 Dourdan (FR)**

(74) Mandataire : **Armengaud Ainé, Alain**
**Cabinet ARMENGAUD AINE 3 Avenue Bugeaud**
**F-75116 Paris (FR)**

## Description

Cette invention est relative à un dispositif de distribution de gobelets pour distributeur automatique de boissons.

On sait que des distributeurs automatiques de boissons comportent des moyens pour délivrer des gobelets, généralement en carton. Les solutions actuellement utilisées présentent notamment l'inconvénient de ne pas pouvoir s'appliquer à des gobelets présentant des sections non circulaires (voir par exemple FR-A 23 98 668 et FR-A 15 45 775).

L'invention se propose d'apporter une solution originale à ce problème, permettant en outre d'assurer une distribution de gobelets de différentes formes.

Selon un premier aspect, cette invention concerne un dispositif de distribution de gobelets pour distributeur automatique de boissons, caractérisé en ce qu'il comprend : une pièce fixe ayant un profil extérieur circulaire et pourvue d'un alésage interne pour recevoir les gobelets empilés, cette pièce étant munie de deux séries de logements périphériques et superposés, recevant des billes mobiles radialement, la disposition étant telle que les billes de chaque série peuvent occuper successivement une position dans laquelle elles maintiennent en place un gobelet, et une position dans laquelle elles libèrent ce gobelet, et une plaque mobile pourvue d'un alésage central recevant ladite pièce, le profil de cet alésage étant conçu de manière à assurer le déplacement desdites billes afin que les billes de la série supérieure soient verrouillées, en retenant le gobelet considéré, lorsque la plaque mobile est en position haute, et que les billes de la série inférieure soient alors libres, pour assurer la distribution du gobelet qu'elles retenaient auparavant.

Selon une caractéristique particulièrement avantageuse, et indiquée dans la revendication 2 de cette invention, l'alésage interne de ladite plaque mobile comprend une partie centrale de diamètre réduit, pour appliquer les billes correspondantes contre le rebord supérieur du gobelet à maintenir, et des parties supérieure ou inférieure de diamètre plus important, pour recevoir les billes correspondantes afin de libérer le gobelet devant être distribué à l'utilisateur.

Selon un autre aspect de l'invention, celle-ci concerne un dispositif de distribution de gobelets pour distributeur automatique de boissons, caractérisé en ce qu'il comprend : une pièce mobile ayant un profil extérieur circulaire et pourvue d'un alésage interne pour recevoir les gobelets empilés, cette pièce étant munie de deux séries de logements périphériques et superposés, recevant des billes mobiles radialement, la disposition étant telle que les billes de chaque série peuvent occuper successivement une position dans laquelle elles maintiennent en place un gobelet, et une position dans laquelle elles libèrent ce gobelet, et une plaque fixe pourvue d'un alésage étant conçu de manière à assurer le déplacement desdites billes afin que les billes de la série supérieure soient verrouillées, en retenant le gobelet considéré, lorsque la pièce mobile est en position haute, et que les billes de la série inférieure soient alors libres, pour assurer la distribution du gobelet qu'elles retenaient auparavant.

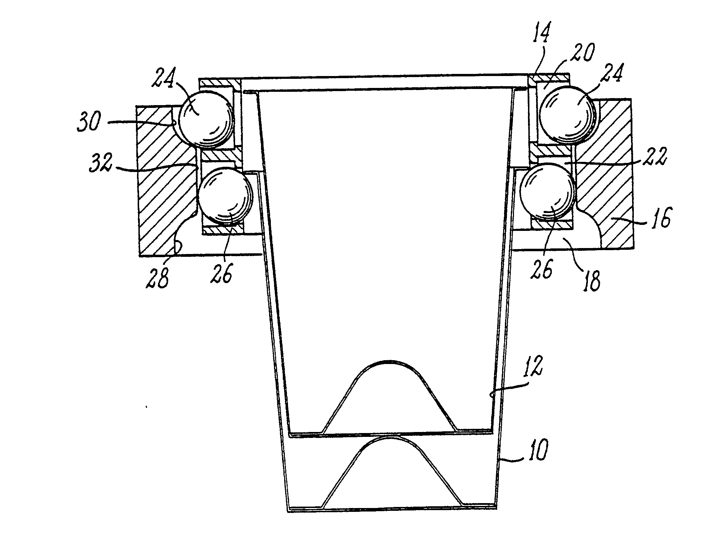

D'autres caractéristiques et avantages de cette invention ressortiront de la description faite ci-après en référence au dessin annexé, dont la Figure unique est une vue schématique, en élévation latérale et coupe verticale, d'un exemple de réalisation de l'invention.

Sur la Figure, on voit en 10 et 12 deux gobelets faisant partie d'une pile, à partir de laquelle le dispositif selon l'invention distribue les gobelets un à un aux différents utilisateurs d'une machine distributrice de boissons.

Le dispositif selon l'invention comprend deux éléments principaux : une pièce fixe 14, et une plaque mobile 16, comportant un alésage 18 dans lequel est logée la pièce fixe 14. Selon une variante la pièce 14 est mobile et la pièce 16 est fixe. La pièce fixe 14 a un profil extérieur circulaire et un alésage interne pour recevoir les gobelets.

Sur la périphérie de la pièce 14 sont prévus deux jeux de logements superposés, 20-22, respectivement, recevant des billes 24 (billes supérieures) et 26 (billes inférieures). Les dimensions des logements 20, 22 sont telles que les billes peuvent se déplacer radialement, comme on le verra ci-après, de manière à pouvoir successivement bloquer en position un gobelet, ou le libérer.

La plaque mobile 16 peut se déplacer verticalement, selon un mouvement alternatif de translation, à l'aide de moyens connus (non représentés). Sur son alésage central, on prévoit des rampes supérieure 28 et inférieure 30, séparées par une partie cylindrique 32, dont le diamètre correspond au diamètre le plus faible de l'alésage 18. Les rampes, comme on peut le voir sur le dessin, servent partiellement de logements aux billes quand celles-ci sont en position de retrait par rapport au rebord du gobelet considéré (cas des billes supérieures 24). Par contre, la partie cylindrique 32 de l'alésage 18 sert à appliquer les billes (il s'agit ici des billes inférieures 26) contre le gobelet considéré, pour le bloquer en position.

Le fonctionnement de ce dispositif est le suivant : dans la position représentée sur le dessin, les billes inférieures 26 sont bloquées en position entre la partie cylindrique 32 de l'alésage 18 et le rebord du gobelet inférieur 10. Celui-ci est donc maintenu dans le dispositif. Les billes supérieures 24 sont en retrait par rapport aux billes 26, le gobelet 12 n'est pas maintenu par ces billes 24, et il repose librement, par son fond, sur le gobelet 10.

Lorsque l'utilisateur actionne la machine de distribution pour obtenir un gobelet, la plaque mobile 16 est entraînée vers le haut, selon un mouvement de translation verticale. Au cours de ce déplacement, les billes inférieures 26 glissent sur la rampe inférieure 28 en s'écartant du gobelet, qu'elles libèrent, ce dernier est délivré à l'utilisateur. Simultanément, les billes supérieures 24 ont été repoussées radialement vers l'intérieur, sous l'effet de la partie cylindrique 32 de la plaque mobile 16 et le rebord du gobelet supérieur 12. Celui-ci est donc maintenu bloqué, lorsque le dispositif délivre le gobelet inférieur.

Lorsque la plaque mobile 16 revient en position inférieure, les billes supérieures 24 libèrent le gobelet qu'elles retenaient, celui-ci descend pour occuper la position du gobelet inférieur 10 du dessin, position dans laquelle il est bloqué par les billes inférieures 26, en attente de distribution.

On remarque que le dispositif qui vient d'être décrit assure simultanément et automatiquement une distribution des gobelets un par un, et une mise en position d'attente de distribution du gobelet devant être ultérieurement délivrée, ce qui permet d'obtenir une distribution sans à-coups.

Par ailleurs, ce dispositif peut délivrer des conteneurs, et notamment des gobelets, de sections droites diverses ; il suffit en effet de donner à l'alésage interne de la pièce fixe 14 une forme correspondant à celle des conteneurs à délivrer.

Il demeure bien entendu que cette invention n'est pas limitée à l'exemple de réalisation décrit et représenté ; c'est ainsi que, dans la description qui précède, la plaque 16 est mobile et la pièce 14 fixe, alors que, selon une variante, la pièce 14 est mobile et la plaque 16 est fixe.

## Revendications

1. Dispositif de distribution de gobelets pour distributeur automatique de boissons, caractérisé en ce qu'il comprend : une pièce (14) fixe ayant un profil extérieur circulaire et pourvue d'un alésage interne pour recevoir les gobelets empilés (10, 12), cette pièce étant munie de deux séries de logements (20-22) périphériques et superposés, recevant des billes mobiles radialement (24, 26), la disposition étant telle que les billes de chaque série peuvent occuper successivement une position dans laquelle elles maintiennent en place un gobelet, et une position dans laquelle elles libèrent ce gobelet, et une plaque mobile (16) pourvue d'un alésage central (18) recevant ladite pièce (14), le profil de cet alésage étant conçu de manière à assurer le déplacement desdites billes afin que les billes (24) de la série supérieure soient verrouillées, en retenant le gobelet considéré, lorsque la plaque mobile est en position haute, et que les billes (26) de la série inférieure soient alors libres, pour assurer la distribution du gobelet qu'elles retenaient auparavant.

2. Dispositif selon la revendication 1, caractérisé en ce que l'alésage interne (18) de la plaque mobile (16) comprend une partie centrale (32) de diamètre réduit, pour appliquer les billes correspondantes contre le rebord supérieur du gobelet à maintenir, et des parties inférieure (28) et supérieure (30), de diamètre plus important, pour recevoir les billes correspondantes, afin de libérer le gobelet à distribuer.

3. Dispositif selon la revendication 2, caractérisé en ce que la partie centrale de diamètre réduit (32) est cylindrique, et en ce que les parties inférieure (28) et supérieure (30) constituent des rampes le long desquelles roulent les billes, lorsque se déplace la plaque mobile (16).

4. Dispositif de distribution de gobelets pour distributeur automatique de boissons, caractérisé en ce qu'il comprend : une pièce mobile (14) ayant un profil extérieur circulaire et pourvue d'un alésage interne pour recevoir les gobelets empilés (10, 12), cette pièce annulaire étant munie de deux séries de logements (20-22) périphériques et superposés, recevant des billes mobiles radialement (24, 26), la disposition étant telle que les billes de chaque série peuvent occuper successivement une position dans laquelle elles maintiennent en place un gobelet, et une position dans laquelle elles libèrent ce gobelet, et une plaque fixe (16) pourvue d'un alésage central (18) recevant ladite pièce (14), le profil de cet alésage étant conçu de manière à assurer le déplacement desdites billes afin que les billes (24) de la série supérieure soient verrouillées, en retenant le gobelet considéré, lorsque la pièce mobile est en position haute, et que les billes (26) de la série inférieure soient alors libres, pour assurer la distribution du gobelet qu'elles retenaient auparavant.

## Claims

1. Apparatus for delivering cups for automatic beverage distribution machines, characterized in that it comprises : a fixed member (14) having a circular external profile and provided with an inner bore for receiving the stacked cups (10, 12), said member being formed with two arrays of peripheral and superimposed peripheral housings (20-22), receiving radially mobile balls (24, 26), the arrangement being such that the balls of each array can occupy successively a position in which they maintain a cup in place, and a position in which they free said cup, and a mobile plate (16) formed with a central bore (18) receiving said member (14), the profile of said bore being designed such as to provide the displacement of said balls so that the balls (24) of the upper array be latched while retaining the cup in consideration, while the mobile plate is in a high position, and the balls (26) of the lower array be then free in order to provide the dispensing of the cup they were previously retaining.

2. A device according to claim 1, wherein the inner bore (18) of the mobile plate (16) is formed with a reduced size central portion (32) for applying the corresponding balls against the upper edge of the cup to be maintained, and lower (28) and upper (30) portions of larger size for receiving the corresponding balls so as to free the cup which has to be dispensed.

3. A device according to claim 2, wherein the central portion of reduced diameter (32) is cylindrical, and the lower (28) and upper (30) portions form ramps along which roll the balls when the mobile plate (16) is moving.

4. Apparatus for delivering cups for automatic beverage distribution machines, characterized in that it comprises : a mobile member (14) having a circular external profile and provided with an inner bore for receiving the stacked cups (10, 12), said member being formed with two arrays of peripheral and superimposed peripheral housings (20-22), receiving radially mobile balls (24, 26), the arrangement being such that the balls of each array can occupy successively a position in which they maintain a cup in place, and a position in which they free said cup, and a fixed plate (16) formed with a central bore (18) receiving said member (14), the profile of said bore being designed such as to provide the displacement of said balls so that the balls (24) of the upper array be latched while retaining the cup in consideration, while the mobile plate is in a high position, and the balls (26) of the lower array be then free, in order to provide the dispensing of the cup they were previously retaining.

**Patentansprüche**

1. Becherabgabevorrichtung für automatische Getränke-ausgabemaschine, dadurch gekennzeichnet, dass sie ein Teil (14) enthält, das einen Kreisförmigen Aussenquerschnitt aufweist und mit einer inneren Bohrung zur Aufnahme von aufeinandergesetzten Bechern (10, 12) versehen ist, wobei dieses Teil zwei Reihen von übereinanderliegenden, am Umfang verteilten Ausnehmungen (20-22), in welche Kugeln (24, 26) radial so eingesetzt werden, dass die Kugeln jeder Reihe zunächst eine Stellung, in welcher sie einen Becher festhalten, und dann eine Stellung, in welcher sie den Becher freigeben, nacheinander einnehmen, und eine bewegliche Platte (16) aufweist, die mit einer zentralen Bohrung (18) versehen ist, die das Teil (14) aufnimmt, wobei der Querschnitt der Bohrung so ausgebildet ist, dass er die Bewegung der Kugeln gestattet, damit die Kugeln (24) der oberen Reihe verriegelt werden und den Becher festhalten, wenn sich die bewegliche Platte in ihrer oberen Lage befindet, während die Kugeln (26) der unteren Reihe frei sind, um die Ausgabe mittels des durch sie vorher festgehaltenen Bechers zu gewährleisten.

2. Vorrichtung nach Anspruch 1, dadurch gekennzeichnet, dass die innere Bohrung (18) der beweglichen Platte (16) einen zentralen Abschnitt (32) mit einen kleinerem Durchmesser, der dazu dient, die entsprechenden Kugeln gegen den oberen Rand des festzuhaltenden Bechers zu drücken, und einen unteren (28) und oberen (30) Abschnitt mit einem grösseren Durchmesser aufweist, der dazu dient, die entsprechenden Kugeln aufzunehmen, um den auszugebenden Becher freizulassen.

3. Vorrichtung nach Anspruch 2, dadurch gekennzeichnet, dass der zentrale Abschnitt (32) mit kleinerem Durchmesser zylindrisch ausgebildet ist, dass die untere (28) und obere (30) Bereiche als Schrägflächen ausgebildet sind, auf welche die Kugel bei der Bewegung der beweglichen Platte (16) rollen.

4. Becherabgabevorrichtung für automatische betränkeausgabemaschine, dadurch gekennzeichnet, dass sie ein bewegliches Teil (14) enthält, das einen Kreisförmigen Aussenquerschnitt aufweist und mit einer inneren Bohrung zur Aufnahme von aufeinandergesetzten Bechern (10, 12) versehen ist, wobei dieses Teil zwei Reihen von übereinanderliegenden, am Umfang verteilten Ausnehmungen (20-22), in welche Kugeln (24, 26) so eingesetzt werden, dass die Kugeln jeder Reihe zunächst eine Stellung, in welcher sie einen Becher festhalten, und dann eine Stellung, in welcher sie den Becher freigeben, nacheinander einnehmen, und eine bewegliche Platte (16) aufweist, die mit einer zentralen Bohrung (18) versehen ist, die das Teil (14) aufnimmt, wobei der Querschnitt der Bohrung so ausgebildet ist, dass er die Bewegung der Kugeln gestattet, damit die Kugeln (24) der oberen Reihe verriegelt werden und den Becher festhalten, wenn sich das bewegliche Teil in seinem oberen Lage befindet, während die Kugeln (26) der unteren Reihe frei sind, um die Ausgabe mittels des durch sie vorher festgehaltenen Bechers zu gewährleisten.